# DEMANDE DE BREVET EUROPEEN

(11) **EP 2 770 614 A2**
(43) Date de publication de la demande: **27.08.2014**
(21) Numéro de dépôt: 14155496.4
(22) Date de dépôt: 18.02.2014
(51) Int. Cl.: H02K 11/04

(54) **Agencement de redressement du courant pour une machine électrique comportant entre autres une cache d'isolation**

(30) Priorité: 20.02.2013 FR 1351446
(71) Demandeur: VALEO EQUIPEMENTS ELECTRIQUES MOTEUR, 94046 Créteil (FR)
(72) Inventeur: Depre, Tony, 62170 Attin (FR)
(74) Mandataire: Ribeil, Alexandre

(57) **Abrégé**

L'invention concerne essentiellement un agencement de redressement du courant (21) pour une machine électrique tournante (20) ayant un axe (B) de rotation et un stator comportant un bobinage, ledit agencement comportant :
- un dissipateur positif (31) comportant une première pluralité d'éléments de redressement,
- un dissipateur négatif (25) comportant une deuxième pluralité d'éléments de redressement,
- un connecteur (30) intercalé entre le dissipateur positif (31) et le dissipateur négatif (25), ledit connecteur (30) comportant un crochet de connexion (32) positionné en saillie par rapport à un bord latéral externe (42) dudit connecteur, caractérisé en ce que le connecteur (30) comporte en outre un cache d'isolation (50) fixé sur une face externe dudit connecteur (30) et s'étendant axialement vers l'extérieur de la machine électrique tournante (20) de manière à isoler électriquement le crochet de connexion (32) du dissipateur positif (31).

## Description

### DOMAINE TECHNIQUE

L'invention appartient au domaine des machines électriques tournantes pour véhicule automobile, et concerne plus particulièrement un agencement de redressement du courant pour une machine électrique tournante.

### ÉTAT DE LA TECHNIQUE

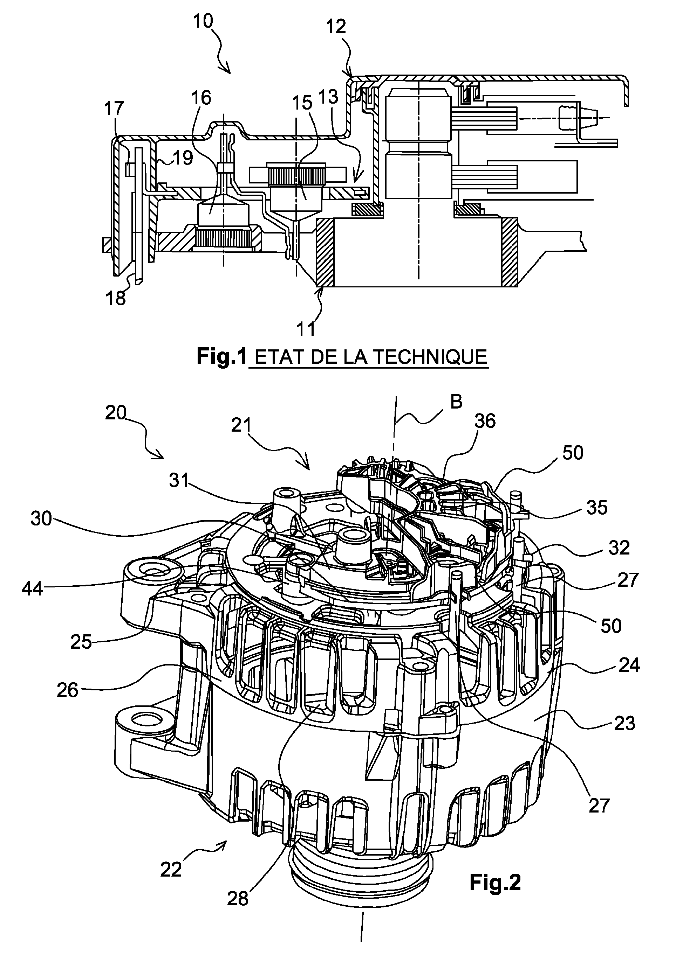

La figure 1 est une vue partielle en coupe axiale d'une machine électrique tournante 10 selon l'art antérieur. Comme cela est décrit dans le document EP 0 743 739, ladite machine 10 comporte un carter comprenant deux flasques appelés palier avant et palier arrière 11. De plus, ladite machine 10 comporte un capot 12 de protection fixé par encliquetage sur le palier arrière 11. Ladite machine 10 comporte en outre un stator comportant un bobinage constitué d'une pluralité d'enroulements. Selon cet art antérieur la machine 10 comprend un agencement de redressement du courant permettant de redresser le courant alternatif induit dans les enroulements du bobinage du stator en courant continu afin d'alimenter les consommateurs et de recharger la batterie du véhicule automobile.

Ledit agencement de redressement du courant comporte un connecteur 13, intercalé entre un dissipateur positif comportant une pluralité de diodes 15, dites diodes positives 15, et le palier arrière 11, dit dissipateur négatif 11, comportant une pluralité de diodes 16, dites diodes négatives 16. Le palier arrière 11 est relié à la masse, le dissipateur positif est relié à la borne positive de la batterie du véhicule automobile.

Le connecteur 13 permet de relier les diodes positives 15, et les diodes négatives 16 entre elles. A cet effet, ledit connecteur 13 est constitué d'une plaque en matériau isolant surmoulé sur un ensemble de conducteurs. Lesdits conducteurs, appelés crochets de connexion 17, permettent de relier les sorties 18 des enroulements du bobinage du stator aux diodes positives 15 et négatives 16. Lesdits crochets de connexion 17 sont positionnés en saillie sur la périphérie externe du connecteur 13.

Afin d'éviter les courts circuits, le capot de protection 12 comporte des jupes 19 s'étendant axialement vers le connecteur 13, ces jupes 19 assurant ainsi un isolement électrique entre les crochets de connexion 17 et les diodes positives 15 du dissipateur positif.

Cependant, en cas de crash du véhicule automobile, si le capot de protection 12 est arraché, les jupes 19 n'isolent plus les crochets de connexion 17 des diodes 15 du dissipateur positif. Le crochet de connexion 17 vient alors en contact avec le dissipateur positif ce qui créé un court-circuit avec un risque d'incendie du véhicule automobile.

### EXPOSÉ DE L'INVENTION

L'invention a notamment pour but de résoudre les inconvénients de l'art antérieur.

A cette fin, l'invention concerne un agencement de redressement du courant pour une machine électrique tournante ayant un axe de rotation et un stator comportant un bobinage, ledit agencement comportant :
- un dissipateur positif comportant une première pluralité d'éléments de redressement,
- un dissipateur négatif comportant une deuxième pluralité d'éléments de redressement,
- un connecteur intercalé entre le dissipateur positif et le dissipateur négatif, ledit connecteur comportant un crochet de connexion positionné en saillie par rapport à un bord latéral externe dudit connecteur, ledit crochet de connexion permettant de relier une sortie d'un enroulement du bobinage du stator aux éléments de redressement,
tel que le connecteur comporte en outre un cache d'isolation fixé sur une face externe dudit connecteur et s'étendant axialement vers l'extérieur de la machine électrique tournante de manière à isoler électriquement le crochet de connexion du dissipateur positif.

Ainsi, l'invention permet d'éviter le contact entre le crochet de connexion et le dissipateur positif, y compris en cas de crash du véhicule et d'arrachement du capot de protection.

L'invention est avantageusement mise en oeuvre selon les modes de réalisation exposés ci-après, lesquels sont à considérer individuellement ou selon toute combinaison techniquement opérante.

Avantageusement, le cache d'isolation comporte une face externe et une face interne reliées par deux bords latéraux s'étendant axialement, la face interne et la face externe étant courbées de sorte que lesdits bords latéraux sont positionnés au niveau du bord latéral externe du connecteur, la partie centrale du cache d'isolation étant positionnée à distance du bord latéral externe que lesdits bords latéraux.

Ainsi, le cache d'isolation entoure le crochet de connexion.

Avantageusement, le dissipateur positif comporte un bord latéral externe positionné plus proche de l'axe de la machine électrique tournante que le bord latéral externe du connecteur.

Ainsi, le dissipateur positif laisse apparaître une partie de la face externe du connecteur comportant les caches d'isolation et les crochets de connexion.

Avantageusement,
- le dissipateur positif comporte une face externe et des parois radiales et des parois transversales s'étendant axialement vers l'extérieur de la machine électrique tournante depuis ladite face externe,
- le cache d'isolation s'étend axialement jusqu'au même niveau que les parois radiales et les parois transversales du dissipateur positif.

Ainsi, le cache d'isolation isole complètement les crochets de connexion du dissipateur positif.

Avantageusement, le cache d'isolation est en matière plastique.

Avantageusement, le connecteur comporte :
- une pluralité de crochets de connexion positionnés en saillie par rapport au bord latéral externe dudit connecteur,
- une pluralité de caches d'isolation fixés sur la face externe dudit connecteur et s'étendant axialement vers l'extérieur de la machine électrique tournante, chaque cache d'isolation étant associé à un crochet de connexion différent.

Avantageusement, d'isolation sont liés entre eux de sorte que lesdits caches d'isolation forment un mur continu d'isolation de tous les crochets de connexion.

L'invention concerne également une machine électrique tournante comportant un stator comportant un bobinage et un agencement de redressement de courant, ledit agencement comportant :
- un dissipateur positif comportant une première pluralité d'éléments de redressement,
- un dissipateur négatif comportant une deuxième pluralité d'éléments de redressement,
- un connecteur intercalé entre le dissipateur positif et le dissipateur négatif, ledit connecteur comportant un crochet de connexion positionné en saillie par rapport à un bord latéral externe dudit connecteur, ledit crochet de connexion permettant de relier une sortie d'un enroulement du bobinage du stator aux éléments de redressement,
tel que le connecteur comporte en outre un cache d'isolation fixé sur une face externe dudit connecteur et s'étendant axialement vers l'extérieur de la machine électrique tournante de manière à isoler électriquement le crochet de connexion du dissipateur positif.

### PRÉSENTATION DES FIGURES

L'invention sera mieux comprise à la lecture de la description suivante, donnée à titre d'exemple nullement limitatif, et faite en se référant aux figures qui représentent :
- Figure 1 (déjà décrite) : une vue partielle en coupe axiale d'une machine électrique tournante selon l'état de l'art ;
- Figure 2 : une représentation schématique d'un agencement de redressement de courant pour machine électrique tournante selon un exemple de réalisation de l'invention ;
- Figure 3 : une représentation schématique d'un agencement de redressement de courant pour machine électrique tournante selon un exemple de réalisation de l'invention ;
- Figure 4 : une représentation schématique d'un connecteur d'un agencement de redressement de courant pour machine électrique tournante selon un exemple de réalisation de l'invention ;

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE DE MODES DE RÉALISATION

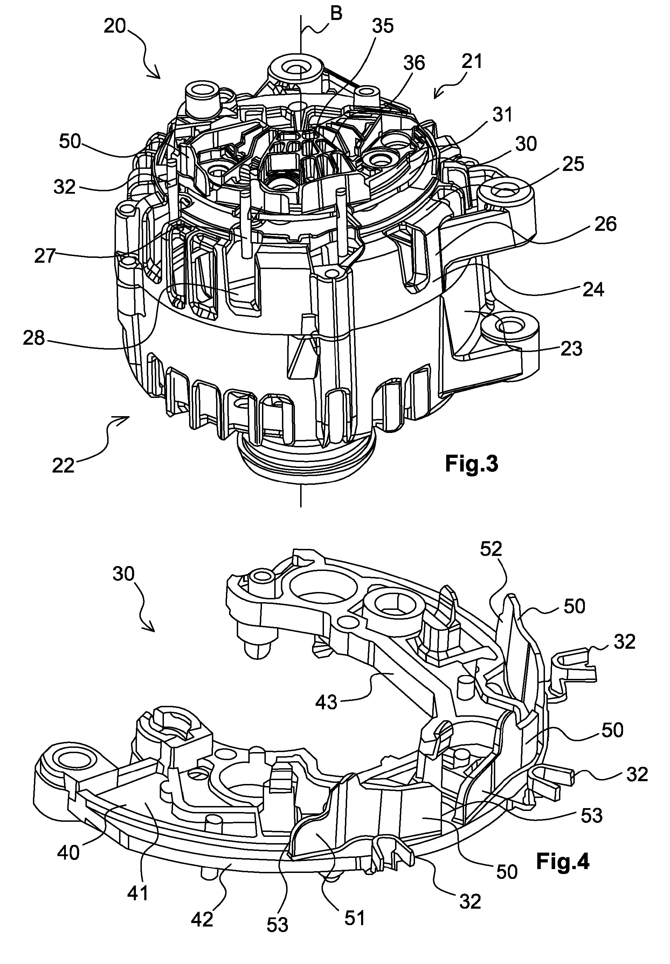

Les figures 2 et 3 montrent une machine électrique tournante 20 pour véhicule automobile, équipé d'un agencement 21 de redressement du courant. Selon un exemple de réalisation ladite machine 20 est un alternateur pour véhicule automobile. La machine 20 comporte un arbre central d'axe B de rotation, un rotor solidaire de l'arbre central, un stator entourant le rotor, un carter 22 et un capot de protection ajouré, qui coiffe l'agencement 21. Le rotor et le stator sont montés à l'intérieur du carter 22.

Le carter 22 comprend un flasque avant 23, dit palier avant 23, et un flasque arrière 24, dit palier arrière 24. Les paliers 23, 24 sont globalement de forme annulaire et creuse. Chaque palier 23, 24 comporte un plateau 25 positionné sur un plan perpendiculaire à l'axe B et comporte à la périphérie externe dudit plateau 25 un rebord annulaire 26 s'étendant axialement vers l'intérieur de la machine 20, c'est-à-dire s'étendant vers le rotor. Les paliers 23, 24 sont métalliques et électriquement conducteurs, préférentiellement constitués d'une matière moulable.

Le rotor est un rotor à griffes ou un rotor à pôles saillants. Le stator comporte un bobinage comportant une pluralité d'enroulements. Les sorties 27 des enroulements traversent chacune la partie radiale d'une ouverture de sortie d'air 28 du palier arrière 24 pour pénétrer chacune dans un bossage du capot de protection.

Lorsque le rotor tourne et qu'un courant électrique circule dans le bobinage inducteur d'excitation, ce rotor est magnétisé et un courant alternatif est induit dans les enroulements du stator. L'agencement 21 de redressement du courant permet de redresser le courant alternatif induit dans les enroulements du bobinage du stator en courant continu afin d'alimenter les consommateurs et de recharger la batterie du véhicule automobile.

L'agencement 21 comporte un connecteur 30 intercalé entre un dissipateur de chaleur 31 métallique, appelé dissipateur de chaleur positif 31 et le plateau 25 du palier arrière 24, appelé dissipateur de chaleur négatif 25. Le dissipateur de chaleur positif 31 porte une première pluralité de diodes, dites diodes positives, et est relié à la borne positive de la batterie du véhicule automobile. Le dissipateur de chaleur négatif 25, qui porte une deuxième pluralité de diodes, dites diodes négatives, est relié à la masse du véhicule automobile, reliée à la borne négative de la batterie du véhicule automobile.

Les diodes positives sont dotées chacune d'un corps cylindrique moleté constituant une borne de connexion électrique avec le dissipateur positif 31, et d'une queue constituant une autre borne de connexion électrique avec un réseau de conducteurs électriques appartenant au connecteur 30. De même, les diodes négatives sont dotées chacune d'un corps cylindrique moleté constituant une borne de connexion électrique avec le dissipateur négatif 25, et d'une queue constituant une autre borne de connexion électrique avec le réseau de conducteurs électriques appartenant au connecteur 30.

En variante, les diodes sont remplacées par un transistor du type MOSFET, ou un autre type d'élément de redressement, c'est-à-dire un autre type de composant électronique adapté au redressement du courant.

Le connecteur 30 est en un matériau électriquement isolant, ici en matière plastique, surmoulé sur ledit réseau de conducteurs électriques. Le connecteur 30 réalise ainsi une isolation électrique entre le dissipateur positif 31 et le dissipateur négatif 25, qui sont à des potentiels différents. Le connecteur 30 permet en outre de relier les sorties 27 des enroulements du bobinage du stator aux diodes ainsi que lesdites diodes entre elles. A cet effet, les conducteurs électriques du réseau de conducteurs électriques sont localement apparents, c'est-à-dire dénudés pour former des connexions électriques qui permettent de relier entre elles les queues d'une paire de diodes avec une sortie 27 afin de créer un pont entre le dissipateur positif 31 et le dissipateur négatif 25, ainsi que pour permettre le redressement de courant alternatif en courant continu. Une pluralité desdits conducteurs électriques, appelés crochets de connexion 32, permet de relier les sorties 27 des enroulements du bobinage, qui sont par exemple connectées en étoile ou en triangle, aux diodes.

Plus précisément, le dissipateur positif 31 prend globalement la forme d'une plaque s'étendant dans un plan perpendiculaire à l'axe B. Ladite plaque comporte une face externe tournée vers l'extérieur de la machine 20 et une face interne parallèle à ladite face interne et tournée vers l'intérieur de la machine 20. La face externe et la face interne sont reliées par un bord latéral externe 46 tourné vers l'extérieur de la machine 20, un bord latéral interne tourné vers l'intérieur de la machine 20 et deux autres bords latéraux s'étendant axialement et reliant en outre le bord latéral externe 46 et le bord latéral interne. Des parois radiales 35 et des parois transversales 36 s'étendent axialement vers l'extérieur depuis la face externe du dissipateur positif 31 afin d'améliorer les échanges thermiques.

Un ensemble régulateur de tension - porte balais, est implanté entre les deux bords latéraux reliant le bord latéral externe 46 et le bord latéral interne du dissipateur positif 31. Le dissipateur positif 31 est en matière moulable, il est par exemple constitué d'un alliage d'aluminium, d'un alliage de magnésium ou d'un alliage à base de cuivre.

De même, comme le montre la figure 4, le connecteur 30 prend globalement la forme d'une plaque 40 en arc de cercle s'étendant dans un plan perpendiculaire à l'axe B. Ladite plaque 40 comporte une face externe 41 tournée vers l'extérieur de la machine 20 et une face interne parallèle à ladite face externe et tournée vers l'intérieur de la machine 20. La face externe 41 et la face interne sont reliées par un bord latéral externe 42 tourné vers l'extérieur de la machine 20, un bord latéral interne 43 tourné vers l'intérieur de la machine 20 et deux autres bords latéraux s'étendant axialement et reliant en outre le bord latéral externe 42 et le bord latéral interne 43.

Les crochets de connexion 32 sont positionnés en saillie sur la périphérie externe du connecteur 30. Plus précisément, chaque crochet de connexion 32 déborde radialement vers l'extérieur de la machine 20 depuis le bord latéral externe 42 du connecteur 30 puis axialement vers l'extérieur de la machine 20 par rapport au connecteur 30. Chaque crochet de connexion 32 comporte une portion terminale permettant de fixer une sortie 27 d'un enroulement du bobinage du stator. Chaque portion terminale de fixation est globalement en forme de U à branches divergentes rabattables pour former une pince de fixation par sertissage d'une sortie 27 d'un enroulement dénudée au niveau des branches divergentes pour contact électrique avec celles-ci. En variante, les sorties 27 des enroulements sont fixées par soudage sur les portions de fixation des crochets de connexion 32. Selon un exemple de réalisation, le connecteur 30 comporte trois crochets de connexion 32.

Afin d'éviter le contact entre un crochet de connexion 32 et le dissipateur positif 31 en cas d'arrachement du capot de protection, notamment au cours d'un crash du véhicule automobile, le connecteur 30 comporte des caches d'isolation 50 fixé sur la face externe 41 du connecteur 30 et s'étendant axialement vers l'extérieur de la machine 20. Chaque cache d'isolation 50 est associé à un crochet de connexion 32 différent de manière à isoler ledit crochet de connexion 32 ainsi que la sortie 27 associée du dissipateur positif 31.

Chaque cache d'isolation 50 comporte une face externe 51 et une face interne 52. La face externe 51 et la face interne 52 sont reliées par plusieurs bords latéraux dont deux bords latéraux s'étendant axialement 53. La face interne 51 et la face externe 52 sont courbées de sorte que deux bords latéraux s'étendant axialement 53 sont positionnées au niveau du bord latéral externe 42 du connecteur 30 tandis que la partie centrale du cache d'isolation 50 est positionnée plus loin du bord latéral externe 42 que lesdits bords latéraux s'étendant axialement 53 de manière à entourer le crochet de connexion 32 associé audit cache d'isolation 50.

La plaque du dissipateur positif 31 est parallèle à la plaque 40 du connecteur 30. La plaque du dissipateur positif 31 et la plaque 40 du connecteur 30 comportent des orifices permettant le passage d'organes de fixation fixant le dissipateur positif 31 et le connecteur 30 sur le dissipateur négatif 25. Lorsque le dissipateur positif 31 et le connecteur 30 sont ainsi juxtaposés, le bord latéral externe 46 du dissipateur positif 31 est positionné plus proche de l'axe B que le bord latéral externe 42 du connecteur 30. Le dissipateur positif 31 laisse ainsi apparaître une partie de la face externe 41 du connecteur 30 comportant les caches d'isolation 50 et les crochets de connexion 32. Les caches d'isolation 50 s'étendent axialement jusqu'au même niveau que les parois radiales 35 et les parois transversales 36 du dissipateur positif 31 et isolent ainsi complètement les crochets de connexion 32 et les sorties 27 du dissipateur positif 31.

Les caches d'isolation 50 sont en un matériau électriquement isolant. Dans un exemple, les caches d'isolation 50 sont en matière plastique.

En variante, il existe une continuité de matière entre les caches d'isolation 50, de sorte que lesdits caches d'isolation forment un mur continu d'isolation de tous les crochets de connexion 32 et toutes les sorties 27.

## Revendications

1. - Agencement de redressement du courant (21) pour une machine électrique tournante (20) ayant un axe (B) de rotation et un stator comportant un bobinage, ledit agencement comportant :
- un dissipateur positif (31) comportant une première pluralité d'éléments de redressement,
- un dissipateur négatif (25) comportant une deuxième pluralité d'éléments de redressement,
- un connecteur (30) intercalé entre le dissipateur positif (31) et le dissipateur négatif (25), ledit connecteur (30) comportant un crochet de connexion (32) positionné en saillie par rapport à un bord latéral externe (42) dudit connecteur (30), ledit crochet de connexion (32) permettant de relier une sortie (18) d'un enroulement du bobinage du stator aux éléments de redressement,
**caractérisé en ce que** le connecteur (30) comporte en outre un cache d'isolation (50) fixé sur une face externe (41) dudit connecteur (30) et s'étendant axialement vers l'extérieur de la machine électrique tournante (20) de manière à isoler électriquement le crochet de connexion (32) du dissipateur positif (31).

2. - Agencement selon la revendication 1, caractérisé le cache d'isolation (50) comporte une face externe (51) et une face interne (52) reliées par deux bords latéraux s'étendant axialement, la face interne (51) et la face externe (52) étant courbées de sorte que lesdits bords latéraux (53) sont positionnés au niveau du bord latéral externe (42) du connecteur (30), la partie centrale du cache d'isolation (50) étant positionnée à distance du bord latéral externe (42) que lesdits bords latéraux (53).

3. - Agencement selon la revendication 1 ou 2, **caractérisé en ce que** le dissipateur positif (31) comporte un bord latéral externe (46) positionné plus proche de l'axe (B) de la machine électrique tournante (20) que le bord latéral externe (42) du connecteur (30).

4. - Agencement selon l'une des revendications 1 à 3, **caractérisé en ce que** :
- le dissipateur positif (31) comporte une face externe et des parois radiales (35) et des parois transversales (36) s'étendant axialement vers l'extérieur de la machine électrique tournante (20) depuis ladite face externe,
- le cache d'isolation (50) s'étend axialement jusqu'au même niveau que les parois radiales (35) et les parois transversales (36) du dissipateur positif (31).

5. - Agencement selon l'une des revendications 1 à 4, **caractérisé en ce que** le cache d'isolation (50) est en matière plastique.

6. - Agencement selon l'une des revendications 1 à 5, **caractérisé en ce que** le connecteur (30) comporte :
- une pluralité de crochets de connexion (32) positionnés en saillie par rapport au bord latéral externe (42) dudit connecteur (30),
- une pluralité de caches d'isolation (50) fixés sur la face externe (41) dudit connecteur (30) et s'étendant axialement vers l'extérieur de la machine électrique tournante (20), chaque cache d'isolation étant associé à un crochet de connexion différent.

7. - Agencement selon la revendication 6, **caractérisé en ce que** les caches d'isolation (50) sont liés entre eux, de sorte que lesdits caches d'isolation (50) forment un mur continu d'isolation de tous les crochets de connexion (32).

8. - Machine électrique tournante (20) comportant un stator comportant un bobinage et un agencement de redressement de courant (21), ledit agencement comportant :
- un dissipateur positif (31) comportant une première pluralité d'éléments de redressement,
- un dissipateur négatif (25) comportant une deuxième pluralité d'éléments de redressement,
- un connecteur (30) intercalé entre le dissipateur positif (31) et le dissipateur négatif (25), ledit connecteur (30) comportant un crochet de connexion (32) positionné en saillie par rapport à un bord latéral externe (42) dudit connecteur (30), ledit crochet de connexion (32) permettant de relier une sortie (18) d'un enroulement du bobinage du stator aux éléments de redressement,
**caractérisé en ce que** le connecteur (30) comporte en outre un cache d'isolation (50) fixé sur une face externe (41) dudit connecteur (30) et s'étendant axialement vers l'extérieur de la machine électrique tournante (20) de manière à isoler électriquement le crochet de connexion (32) du dissipateur positif (31).
